# DEMANDE DE BREVET EUROPEEN

(11) **EP 1 028 261 A1**
(43) Date de publication de la demande: **16.08.2000**
(21) Numéro de dépôt: 00400205.1
(22) Date de dépôt: 27.01.2000
(51) Int. Cl.: F16B 21/02

(54) **Organe de guidage d'un élément par rapport à une caisse de véhicule automobile sur laquelle il doit être monté**

(30) Priorité: 11.02.1999 FR 9901633
(71) Demandeur: RENAULT, 92513 Boulogne Billancourt Cedex (FR)
(72) Inventeur: Boubendir, Karim, 72000 Le Mans (FR); Nizan, Christophe, 94240 L'Hay les Roses (FR); Thibaut, Christian, 95130 Franconville (FR)

(57) **Abrégé**

Cet organe de guidage (1) destiné à être fixé sur un élément tel qu'une platine de pédalier afin de guider cet élément par rapport à une caisse de véhicule automobile sur laquelle il doit être monté, est remarquable en ce qu'il comprend des moyens (4, 14, 15, 18, 19) permettant sa préhension par un outil de montage.

## Description

La présente invention est relative à un organe de guidage d'un élément par rapport à une caisse de véhicule automobile sur laquelle il doit être monté.

Le montage de certains éléments sur une caisse de véhicule automobile, tels qu'une platine de pédalier, comporte typiquement deux étapes bien distinctes.

Dans un premier temps, un outil de montage saisit l'élément à monter, et dans un deuxième temps, cet outil positionne cet élément sur la caisse du véhicule automobile en vue de sa fixation définitive par soudage et/ou collage.

Traditionnellement, les organes permettant la préhension de l'élément par l'outil de montage et ceux permettant le guidage de cet élément sur la caisse du véhicule automobile sont distincts.

De manière tout à fait répandue, ces organes sont en métal, et ils sont rapportés par soudage sur l'élément à monter, préalablement au montage en question.

Bien que cette solution classique donne satisfaction aux plans de la rapidité et de la précision du montage, elle demeure coûteuse, étant donné la multiplicité des organes à rapporter préalablement sur l'élément à monter.

La présente invention propose une nouvelle solution permettant d'obtenir les mêmes avantages que cette solution classique à un coût nettement inférieur.

On atteint ce but de l'invention, ainsi que d'autres qui apparaîtront à la lecture de ce qui va suivre, avec un organe de guidage destiné à être fixé sur un élément tel qu'une platine de pédalier afin de guider cet élément par rapport à une caisse de véhicule automobile sur laquelle il doit être monté, remarquable en ce qu'il comprend des moyens permettant sa préhension par un outil de montage.

Suivant d'autres caractéristiques de l'organe de guidage selon l'invention:
- il comprend une tige munie de moyens de fixation audit élément, ladite tige comportant en outre lesdits moyens de préhension,
- lesdits moyens de fixation comprennent au moins deux protubérances s'étendant radialement à partir de la périphérie de ladite tige et permettant d'effectuer un blocage du type quart-de-tour sur ledit élément,
- lesdits moyens de fixation comprennent un filetage formé à la périphérie de ladite tige,
- lesdits moyens de préhension comprennent une cavité formée dans ladite tige, au moins deux pans sensiblement parallèles surmontant cette cavité, et au moins deux épaulements surmontant ces deux pans,
- ladite tige est surmontée d'une poignée permettant de mettre en oeuvre manuellement lesdits moyens de fixation,
- ladite poignée a un profil du type papillon,
- ladite tige est munie d'une collerette d'étanchéité adjacente auxdits moyens de fixation,
- ladite tige comprend une plaque de préférence circulaire s'étendant radialement à partir de sa périphérie, afin d'assurer le maintien d'une couche de matériau isolant contre ledit élément,
- cet organe est en matière plastique.

Grâce à ces caractéristiques, l'organe selon l'invention intègre les fonctions de préhension par un outil de montage et de guidage d'un élément destiné à être monté sur une caisse de véhicule automobile, fonctions qui étaient jusque là assurées par des organes différents.

Cet organe peut en outre être fixé manuellement sur l'élément à monter, ce qui évite les opérations coûteuses de soudage de la technique antérieure.

D'autres caractéristiques et avantages de la présente invention apparaîtront à la lecture de la description qui va suivre et à l'examen du dessin annexé, dans lequel:
- la figure 1 est une vue en perspective de l'organe selon l' invention,
- la figure 2 est une vue en coupe de l'organe selon l'invention suivant le plan II de la figure 1,
- la figure 3 est une section de l'organe selon l'invention suivant la ligne III-III de la figure 2,
- la figure 4 est une vue en perspective d'une platine de pédalier équipée de deux organes l'invention, prête à être montée sur une caisse de véhicule automobile,
- la figure 5 est une section de la zone de liaison du pédalier de la figure 4 avec la caisse d'un véhicule automobile. Sur cette figure, l'organe selon l'invention apparaît en section longitudinale. On a en outre représenté l'une des pinces d'un outil de montage de poste de conduite.

Sur ces figures, des références numériques identiques représentent des organes ou des ensembles d'organes identiques ou analogues.

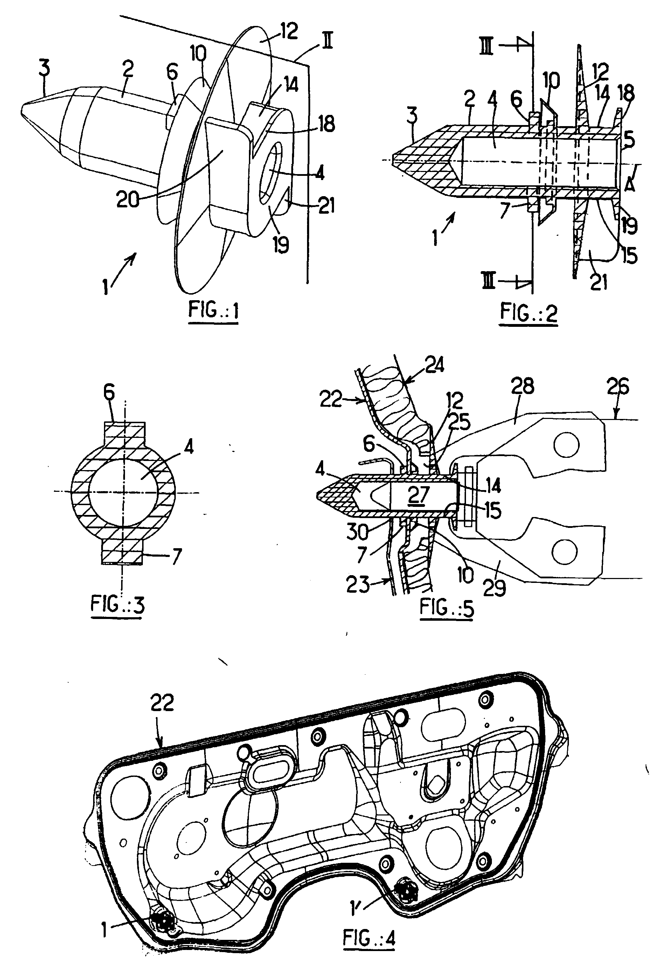

On se réfère à présent aux figures 1 et 2 du dessin annexé, sur lesquelles on voit que l'organe selon l'invention est formé d'une seule et même pièce 1.

Cette pièce comprend une tige 2 effilée à l'une 3 de ses extrémités, dans laquelle est formée une cavité 4 débouchant sur son autre extrémité 5.

Cette tige est munie, en allant de l'extrémité effilée 3 vers l'autre extrémité 4, d'au moins deux protubérances 6, 7 s'étendant radialement à partir de la périphérie de cette tige, d'une collerette d'étanchéité 10, d'une plaque 12 de préférence circulaire s 'étendant radialement à partir de la périphérie de cette tige, d'au moins deux pans 14, 15 surmontant la cavité 4, sensiblement parallèles entre eux et à l'axe A de cette tige, et d'au moins deux épaulements 18, 19 surmontant ces deux pans, sensiblement perpendiculaires à l'axe A.

Deux flancs 20, 21 s'étendent respectivement à partir des deux pans 14, 15 selon une direction sensiblement perpendiculaire à ceux-ci. Ces deux flancs forment une poignée ayant un profil du type papillon.

En se reportant à la figure 3, on peut voir plus précisément la forme des deux protubérances 6, 7. Comme cela apparaît sur cette figure, ces protubérances définissent deux volumes sensiblement parallélépipédiques disposés de manière diamétralement opposée sur la périphérie de la tige 2.

L'organe selon l'invention peut être réalisé dans toute une gamme de matériaux couramment utilisés pour les organes de fixation dans le domaine automobile. De préférence, pour des raisons de coût, on choisira une matière plastique.

Pour comprendre l'utilisation et les avantages de l'organe selon l'invention, on se reporte à présent aux figures 4 et 5.

La figure 4 montre une platine de pédalier 22 équipée de deux organes selon l'invention 1, 1'.

Cette platine de pédalier est destinée à être montée sur la caisse 23 (voir figure 5) d'un véhicule automobile afin d'une part d'isoler le compartiment recevant le moteur de l'habitacle du véhicule, et d'autre part d'accueillir un ensemble de pédalier permettant de commander ce véhicule (le moteur, l'habitacle et l'ensemble de pédalier n'ont pas été représentés).

Préalablement au montage des deux organes 1, 1' sur la platine 22, on dispose sur celle-ci une couche de matériau isolant 24 munie de trous 25 aux emplacements prévus pour ces organes (voir figure 5).

On monte ensuite ces organes sur la platine 22 à la main. Pour ce faire, on introduit la tige 2 de chaque organe dans un orifice formé dans la platine 22 dont le contour correspond à celui de la partie de la pièce 1 représentée sur la figure 3. On prend ensuite appui avec les doigts de la main sur la poignée formée par les deux flancs 20, 21 de l'organe, et on fait pivoter celui-ci d'environ un quart de tour de manière que ses deux protubérances 6, 7 viennent le bloquer par rapport à la platine 22.

Ce faisant, on coince la couche de matériau isolant 24 entre la plaque circulaire 12 de chaque organe et la platine 22, ce qui permet de maintenir cette couche en place.

On remarquera également que, lors de l'opération de blocage des organes 1, 1' sur la platine 22, les collerettes d'étanchéité 10 de chacun d'entre eux viennent s'appliquer contre cette platine, réalisant ainsi une liaison parfaitement étanche entre le compartiment recevant le moteur et l'habitacle.

Une fois que les deux organes 1, 1' sont montés sur la platine 22, un outil de montage de poste de conduite comprenant deux pinces, dont l'une 26 est visible sur la figure 5, vient saisir ces deux organes.

Comme on le voit sur la figure 5, chaque pince 26 comprend un doigt de guidage 27 qui vient se placer dans la cavité 4 de la tige 2 de chaque organe selon l'invention.

Une fois que le doigt 27 est correctement enfoncé dans la cavité 4, les deux mâchoires 28, 29 de la pince 26 viennent serrer les deux pans 14, 15 entre la plaque circulaire 12 et les deux épaulements 18, 19.

Une fois que les deux organes 1, 1' sont saisis, l'outil de montage de poste de conduite amène la platine 22 sur la caisse 23, vers l'endroit où cette platine doit être montée.

Le guidage précis de cette platine par rapport à la caisse 23 s'effectue grâce à la tige 2 de chaque organe 1, 1', laquelle pénètre dans un orifice 30 de forme correspondante formé dans la caisse 23. Cette pénétration est facilitée par la forme effilée de l'extrémité 3 de chaque organe.

Une fois que la platine 22 est correctement positionnée, les mâchoires 28, 29 de chaque pince 26 se desserrent, et l'outil de montage de poste de conduite se retire.

Par la suite, la platine 22 est soudée et/ou collée sur la caisse 23.

Comme on peut le comprendre à présent, l'organe selon l'invention intègre les fonctions de préhension par l'outil de montage de poste de conduite et de guidage de la platine de pédalier par rapport à la caisse du véhicule automobile.

Cet organe peut en outre remplir des fonctions connexes, à savoir: maintenir la couche de matériau isolant contre la platine de pédalier, et assurer une liaison étanche.

Ce cumul de fonctions réunies en un seul organe permet de simplifier les opérations de montage, et ainsi d'abaisser considérablement le coût de fabrication.

Bien entendu, l'invention n'est pas limitée au mode de réalisation décrit et représenté, fourni à titre illustratif et non limitatif.

C'est ainsi par exemple que la fixation de l'organe selon l'invention sur l'élément à monter pourrait être assurée par un filetage formé à la périphérie de la tige de cet organe.

## Revendications

1. Organe de guidage (1) destiné à être fixé sur un élément tel qu'une platine de pédalier (22) afin de guider cet élément par rapport à une caisse de véhicule automobile (23) sur laquelle il doit être monté, comprenant des moyens (4, 14, 15, 18, 19) permettant sa préhension par un outil de montage (26), caractérisé en ce qu'il comprend en outre des moyens (20, 21) permettant son montage manuel sur ledit élément (22).

2. Organe de guidage (1) selon la revendication 1, caractérisé en ce qu'il comprend une tige (2) munie de moyens de fixation (6, 7) audit élément (22), ladite tige étant surmontée d'une part desdits moyens de préhension (4, 14, 15, 18, 19) et d'autre part desdits moyens de montage manuel (20, 21).

3. Organe de guidage (1) selon la revendication 2, caractérisé en ce que lesdits moyens de fixation comprennent au moins deux protubérances (6, 7) s'étendant radialement à partir de la périphérie de ladite tige (2) et permettant d'effectuer un blocage du type quart-de-tour sur ledit élément (22).

4. Organe de guidage (1) selon la revendication 2, caractérisé en ce que lesdits moyens de fixation comprennent un filetage formé à la périphérie de ladite tige (2).

5. Organe de guidage (1) selon l'une quelconque des revendications 2 à 4, caractérisé en ce que lesdits moyens de préhension (4, 14, 15, 18, 19) comprennent une cavité (4) formée dans ladite tige (2), au moins deux pans (14, 15) sensiblement parallèles surmontant cette cavité (4), et au moins deux épaulements (18, 19) surmontant ces deux pans (14, 15).

6. Organe de guidage (1) selon l'une quelconque des revendications 2 à 5, caractérisé en ce que lesdits moyens de montage manuel comprennent une poignée (20, 21).

7. Organe de guidage (1) selon la revendication 6, caractérisé en ce que ladite poignée (20, 21) a un profil du type papillon.

8. Organe de guidage (1) selon l'une quelconque des revendications 2 à 7, caractérisé en ce que ladite tige (2) est munie d'une collerette d'étanchéité (10) adjacente auxdits moyens de fixation (6, 7).

9. Organe de guidage (1) selon l'une quelconque des revendications 2 à 8, caractérisé en ce que ladite tige (2) comprend une plaque (12) de préférence circulaire s'étendant radialement à partir de sa périphérie, afin d'assurer le maintien d'une couche de matériau isolant (24) contre ledit élément (22).

10. Organe de guidage (1) selon l'une quelconque des revendications précédentes, caractérisé en ce qu'il est en matière plastique.
